# EUROPEAN PATENT APPLICATION

(11) **EP 2 508 931 A1**
(43) Date of publication of application: **10.10.2012**
(21) Application number: 11161242.0
(22) Date of filing: 05.04.2011
(51) Int. Cl.: G02B 27/00, G02B 27/22, H04N 13/00

(54) **Micro mirror array screen**

(71) Applicant: Advanced Acoustic SF GmbH, 14467 Postdam (DE)
(72) Inventor: Oellers, Helmut, 99092, Erfurt (DE)
(74) Representative: Farago, Peter Andreas

(57) **Abstract**

The present invention relates to a method for 2D and/or 3D image or video vision for one or more spectators looking at a screen (5), the screen (5) comprising a mirror backplane (10) with a plurality of micro mirrors (1) reflecting light from a light source (60) towards the eyes of one of the spectators, wherein each pixel unit (3) of the screen (5) comprises a group (2) of the micro mirrors (1) being allocated to the one spectator, the method comprising the following steps:
a) capturing an image of the eyes of the one spectator by one or more camera units (70) and determining the position coordinates of the eyes of the one spectator;
b) controlling the micro mirrors (1) each in its azimuth and elevation angle by actuators (6) connected thereto, such that all the micro mirrors (1) of all the groups (2) allocated to the one spectator reflect light beams directly into the eyes of the one spectator;
c) receiving a video input signal for the one spectator and determining thereof the brightness and color for each pixel or group (2), respectively, within the screen (5) for said one spectator;
d) controlling the brightness and color of the reflected and emitted light from all the pixel or groups (2), respectively, by one or multiple LCD panels (8) in front of said micro mirrors (1) of the groups (2), such that the one spectator has an image impression corresponding to the video input signal.

## Description

### Field of the Invention

The present invention relates to a method and to screen replacement including a micro mirror array screen and a light source, the method and the replacement screen being adapted for projecting light of the light source directly into a spectator's eye, thus reducing emitted light energy drastically. Furthermore, the present invention provides a method for 3D vision without necessity of wearing spectacles. Furthermore the present invention provides images with a very high contrast.

### Background of the Invention

Quality of electronic screens as TV, PC and other multimedia screens did increase drastically during the last decades. Standard screens achieved a high definition (HD) resolution of 1920x1080 pixels and large screen diameters of up to 102 inches are not uncommon. A demand for large and even larger screens is still increasing in the rising world of multimedia.

Standard 3D-screens are already available in combination with spectacles comprising polarization filters. The necessary spectacles are not expensive but still uncomfortable. 3D screens are used in the area of multimedia and of CAD applications and will also be used as TV screens in the future. A movement parallax as it occurs in real life moving a head of the spectator is not addressed yet in standard screen devices and would be an additional advantage from a quality stand point.

Large screens are automatically placed further away from the spectator which results in an increasing demand for light illumination energy. Despite of modern LED backlight technology modern large screens of 102 inches, for instance, are still very power consuming, the power thereof being larger than 1 kWatt. Even larger screens and screens in a bright surrounding as for instance outside in the sunlight require even more illumination power which causes also a reduction of their lifetime.

### Summary of the invention:

The purpose of the invention is to overcome the shortcomings explained above and to design a screen with less energy consumption and which is suitable for at least one spectator.

Another purpose of the invention is to achieve a 3D illusion with the screen. Another purpose of the invention is to provide for two or more spectators different images at the same time..

The above purposes as well as further purposes and objectives which will become apparent from the following description are achieved by the features mentioned in the independent claims. Additional features and characteristics of the invention are mentioned in the dependent claims.

Preferably a screen comprises an array of controllable micro mirrors with a LCD panel in front of the controllable micro mirrors and a light source which is separated from the screen and positioned such that light from the light source gets reflected by the array of the controllable micro mirrors directly into both eyes of a spectator. Preferably a camera unit determines a position of a head and of the eyes of the spectator, whereat the reflected light beams get directed to. Each pixel is preferably represented by at least one micro mirror for black and white vision, by a group of three micro mirrors representing the RGB colors for color vision or by a group of six micro mirrors for 3D color vision, per spectator.. The light source comprises preferably three separate RGB lights in the case of color vision..

As apparent from the description thereof, the present invention provides a method for very energy efficient screen vision and in some aspects thereof even with 3D illusion.

Further advantageous aspects of the invention are set out in the following detailed description..

The invention is set forth and characterized in the main claims, while dependant claims describe other advantageous characteristics of the invention..

Solutions of the preferred embodiment according to the present invention are disclosed in the following drawings with detailed description but it shall not be limiting the invention..

### Brief description of the drawings

- Fig. 1: is a three dimensional schematic drawing showing a screen with a spectator in front of the screen, a light source in the back of the spectator and a camera unit;
- Fig. 2: is a schematic drawing and view from a ceiling of a room down to the spectator with the screen in font and the light source in the back of the spectator, the screen in front having some micro mirrors, with light beams impinging on the micro mirrors and being reflected by the same;
- Fig. 3a: is a top view of preferred pixel units for three spectators and mono vision;
- Fig. 3b: is a top view of preferred pixel units for three spectators and stereo 3D vision;
- Fig. 3c: is a top view of preferred pixel units arranged as a set of 6 neighboring pixel units;
- Fig.. 4a: is a side view of a preferred embodiment of the micro mirrors which are mounted on actuators, wherein the actuators are mounted on a micro mirror backplane;
- Fig.. 4b: is a top view of the referred embodiment of the micro mirrors of Fig.. 4a;

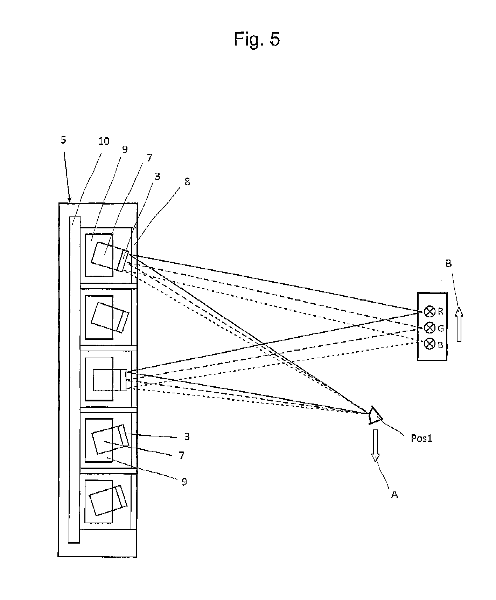

- Fig. 5: is a schematic drawing and view from the ceiling of the room down to one eye of the spectator with the screen in font and the light source in the back thereof, wherein the screen shows schematically pixel units on micro mirror backplanes which are pre-adjustable by pre-adjustment actuators;
- Fig.. 6: is a schematic drawing and view from the ceiling of the room down to the spectator with the screen in the front and the light source in the back thereof, wherein a parallax deviation is shown caused by a movement of the eye from position 1 to position 2.

### Detailed description of the preferential embodiments of the Invention

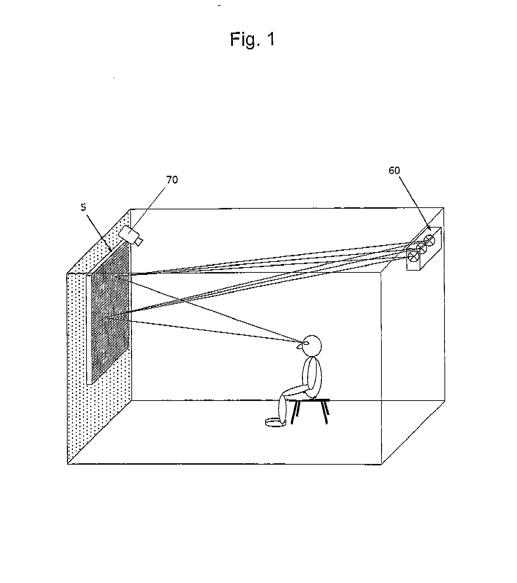

Fig. 1 is a general view showing a preferred screen 5, which is particularly a micro mirror screen 5 mounted on the wall, a spectator looking at the screen 5 and a light source 60 sending out light onto the screen 5 getting reflected there towards a head and eyes of the spectator.. The respective positions or coordinates of the light source 60 and the screen 5 are preferably already determined or get determined by appropriate sensors. The position of the head and the eyes of the spectator get determined by at least one camera unit 70 which preferably comprises two camera chips with optics inside so as to provide stereo 3D-vision and distance measurement For calibration there is preferably a reference point in the room, which is preferably set close to the spectator.. So the camera module gets calibrated by appropriate coordinate transformation providing then exact coordinates or positions, respectively, of the eyes of the spectator..

Preferably the combination of the light source 60 and the screen 5 reflecting the light towards the eyes of the spectator gets also calibrated from time to time, in order to match its coordinate system exactly with that of the camera unit 70. Therefore the reference point preferably comprises a light sensor by which a reflected light beam from the screen 5 can be detected and adjusted by a respective micro mirror 1. Preferably said light sensor is another camera module with appropriate optics..

Another preferred calibration method for the light source 60 and the screen 5 for matching the coordinate system of the camera unit 70 is the provision of a little second screen being a simple surface on or at the reference point. So when the light beam from one of the micro mirrors 1 gets directed onto the little second screen the reflection or the position, respectively, can be detected by the camera unit 70, whereupon a correction of the respective micro mirror 1 is calculated and new respective calibration parameters are sent to the screen 5 or to its control unit.

After having preferably executed calibration procedures as described above, the screen 5, always including the light source 60, is calibrated with respect to the eyes of a specific spectator, wherein all micro mirrors 1 of the screen 5 which are allocated to the specific spectator direct their respective light directly into the eyes of the specific spectator..

In case of a black-and-white vision, one pixel is represented by at least one micro mirror 1 and the light source 60 comprises a white lamp..

In case of a color vision, one pixel is represented by at least three micro mirrors 1 forming a group indicated by reference numeral 2 and the light source 60 comprises preferably three lamps, one emitting in the red (R) range, one emitting in the green (G) range and one emitting in the blue (B) range.. These three light beam colors get mixed then in a retina in the eye of the spectator and can give the impression of any color depending on the energy ratios of the single light beams, as well know to those skilled in the art..

In case of a stereo 3D color vision, one pixel is represented by at least six micro mirrors 1 forming a group 2, the group 2 including three micro mirrors 1 for each eye of the spectator, and the light source 60 comprises preferably again three lamps, one emitting in the red range, one in the green range and one in the blue range.. These three color light beams per pixel get mixed again and can give the impression of any color, as mentioned above..

In case of a stereo 3D color vision for two spectators at the same time, two groups 2 of micro mirrors 1 are necessary, namely a group 2 for each spectator, leading to twelve micro mirrors 1 per pixel.. One pixel unit 3 comprises in that case two groups 2 of micro mirrors 1, wherein each group 2 comprises 6 micro mirrors 1. If a screen 5 is provided with pixel units 3 such that each pixel unit 3 comprises twelve micro mirrors 1, the screen 5 can also be used for instance for four spectators having normal color vision. In other words, a division of the pixel units 3 into groups 2 of micro mirrors 1, each group 2 comprising a number of micro mirrors 1, is preferably only a question of definition and control of the micro mirrors 1 by a microprocessor unit. In other words, such division is not necessarily a hardware division.. Additional light sources 60 can also be added and controlled as appropriate..

The light source 60 is shown in Fig.. 1 comprising the three lamps, one red, one green and one blue, placed at a short distance to each other.. A preferred positioning of the lamps is horizontally but even more preferred is a vertical positioning of the lamps.. As a horizontal moving of the head leads to horizontal parallax deviations, this could cause the mirror, if not adjusted fast enough, to reflect the light of the neighboring lamp which has another color.. Accordingly, this would lead to color changes of the image vision. The light source 60 can be positioned in front or aside or preferably behind the spectator, preferably such that an average angle between the incoming and the reflected light beams of the micro mirrors 1 is as small as possible, in order to achieve small parallax deviations by a moving head..

For achieving a video image illusion with the screen 5 comprising the multiple micro mirrors 1 a light intensity control of each group 2 and preferably even of each single micro mirror 1 of a group 2 must be provided. Therefore a preferred embodiment comprises a controllable LCD pixel matrix panel 8 in front of all the micro mirrors 1 in order to control a passing through light intensity from the respective lamp to the micro mirror 1 and from the micro mirror 1 as a reflection further to the eye of the spectator. As the light beam passes the LCD panel 8 two times the screen 5 has a double contrast compared with conventional LCD panel displays where light passes only one time the LCD panel 8 from a backlight to the spectator's eyes..

Another preferred embodiment comprises color filter elements in front of the LCD panel, such as in front of each micro mirror 1 there is arranged a respective filter element , the respective filter element being determined for one of the colors red, green or blue.. An even more preferred embodiment provides the color filters directly on the respective micro mirror 1, as a thin film or a coating or the like.. This way the light source 60 may comprise only one or more white lamps instead of at least three R, G and B lamps.. Such an arrangement is much less sensitive to movements of the head leading to parallax deviations from previous courses of the beams.. In the case that a longer, horizontal, rectangular or elliptical stripe of white light is provided by the light source 60, only a little or no adjustment of the respective azimuth angles of the micro mirrors 1 for the one or more spectators is needed, in order that the light beams being reflected from the micro mirrors 1 reach the eyes A preferred light source 60 has a big enough light output area that parallax light beam deviations caused by head movements of for instance +/- 10cm do not result in image distortions Therefore the light source 60 has preferably an elliptical light output area, wherein the longer axis is parallel to both eyes of the spectator.

Another preferred embodiment foresees a beamer projector as the light source 60, therewith rendering the LCD panel 8 in front of the micro mirror 1 superfluous.. This may be an attractive solution, but has also a disadvantage in possibly generating Moiré patterns if the alignment between the beamer pixel array and the micro mirrors 1 array is not exactly aligned.

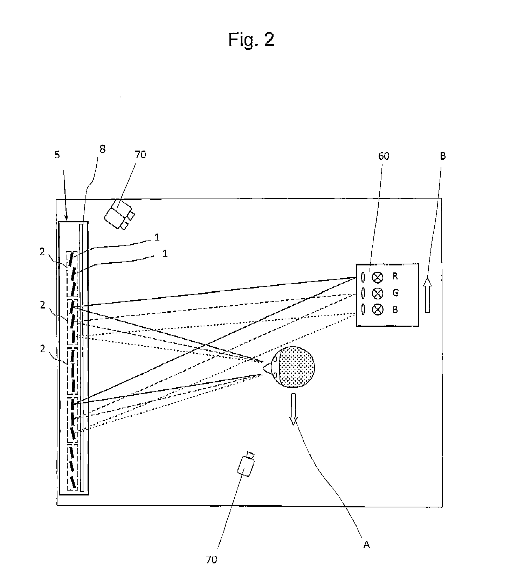

Fig.. 2 depicts a preferred schematic arrangement of the screen 5 with its micro mirrors 1 arranged in groups 2 per pixel and the LCD panel 8, the light source 60, the head and the eyes of the spectator and the camera units 70 which detect the position of the eyes.. Fig. 2 depicts further how the light of the light source 60 gets reflected by two pixels of the screen 5 towards the eyes of the spectator.. Each pixel is represented in this case by a group 2 of three micro mirrors 1, providing together normal color vision. It is shown that each light beam per lamp R, G and B gets reflected by the respective micro mirror 1 towards the head of the spectator, traveling then towards both eyes. Each micro mirror 1 is controlled in its elevation angle and in its azimuth by a respective actuator 6 such that the incoming light beam is reflected directly to the eyes of the spectator. Therefore the camera unit 70 detects the position of the eyes in the coordinate system of the screen device comprising the screen 5, the light source 60 and the camera unit 70. If the spectator's head moves, then all the azimuth and the elevation angles of all the micro mirrors 1 have to be recalculated and controlled by the actuators 6 moving the micro mirrors 1 in their azimuth and elevation angle..

In front of all the micro mirrors 1 towards the spectator there is placed the LCD panel 8 which controls the light transmissions of all micro mirrors 1. The person skilled in the art will appreciate that the matching has to be very precise. A preferred embodiment foresees also a direct placement of micro LCDs on the pixel units 3 or on the groups 2 of micro mirrors 1 or on each of the micro mirrors 1.

A microprocessor unit is not shown in one of the figures, but it shall be mentioned herewith for clarity reasons. A preferred microprocessor unit comprises an input for a video signal which has to be displayed to the one or more spectators, an input for the camera unit 70 and it further comprises output signals for control of all micro mirrors 1 or their actuators 6, respectively, as described above, and an output signal for the LCD panel 8.. Additional outputs as for the light source 60 and for a movement of the light source 60 are also imaginable.

The diameter and shape of a light output of the light source 60 is preferably also controllable in order to get an appropriate light spot in front of the spectator's eyes. In this context it is also imaginable that the light source 60 comprises two sets of RGB lamps or a respective optics, wherein each the two light beams of the same color are arranged in a same plane with the eyes of a spectator and in a distance to each other which corresponds to the distance of the eyes of a spectator to each other. Such an arrangement of two parallel RGB lamp sets provides, with a group 2 of three micro mirrors 1 per pixel, a precise reflection of the light to one eye of the spectator as well as to the other eye of the spectator.

In this context it shall be mentioned that if the spectator moves his head into a movement direction A, a subsequent movement of the light source 60 into a movement direction B compensates a parallax deviation of the image, so that the micro mirrors 1 would not have to be adjusted at the same time with the movement of the head. Such a mechanism drastically reduces calculation power, wherein otherwise all micro mirror positions would have to be calculated for new azimuth and elevation angles instantly.

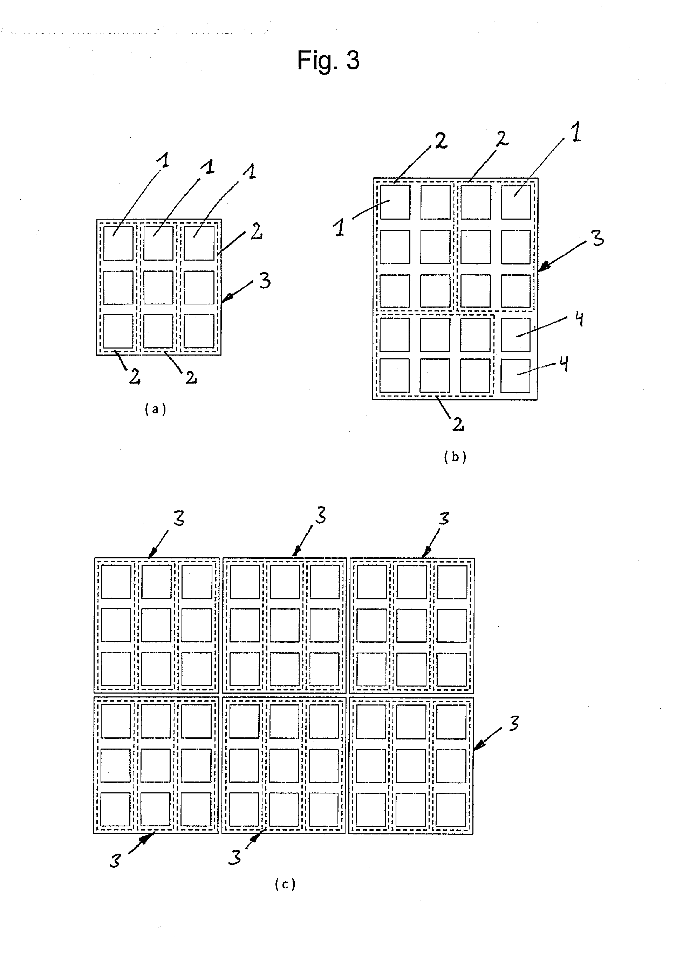

Fig. 3a shows schematically one pixel unit 3 comprising three groups 2 of micro mirrors 1, wherein each group 2 is shown as dotted line and comprises three micro mirrors 1, one micro mirror 1 for each color R, G or B. The screen 5 comprising pixel units 3 as drawn in Fig. 3a would give three spectators simple 2D color vision, or it could provide one spectator 3D color vision and one spectator 2D color vision.

Fig. 3b shows schematically one pixel unit 3 comprising three groups 2 represented in dotted lines and two replacement micro mirrors 4, wherein each group 2 comprises six micro mirrors 1, whereof 3 micro mirrors 1 of the group 2 are dedicated for the one eye and the other three micro mirrors 1 of the group 2 are dedicated for the other eye of the respective spectator. This allows stereo 3D color vision for three spectators or normal 2D color vision for six spectators or combinations thereof. The two replacement micro mirrors 4 are provided for the case that up to two micro mirrors 1 or their actuators 6, respectively, would fail and the replacement micro mirrors 4 could take over their function. In case the two replacement micro mirrors 4 are not used, and this applies also for all of the other micro mirrors 1 which are not used, all not used micro mirrors 1, 4 get preferably turned into a position which does not reflect ambient room or sun light into one of the spectator's eyes and their respective LCD panel pixels are also controlled to become non-transparent.

Fig. 3c shows a part of a surface of the screen 5, having in that part six neighboring pixel units 3 arranged side by side and representing six viewable pixels within the screen 5.

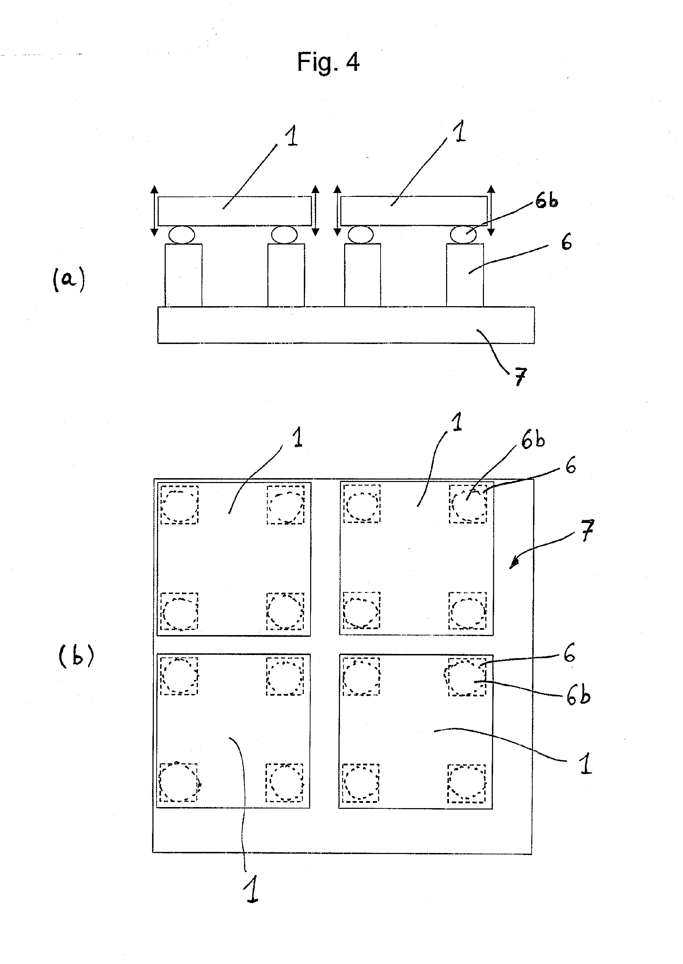

Fig. 4a shows in a side view and schematically a part of a preferred arrangement of the pixel unit 3, out of which two micro mirrors 1 are visible in side view (further two micro mirrors are hidden behind and therefore not visible in this view). The micro mirrors are connected at each of their corners to first ends of the respective actuators 6 by a connection bubble 6b which can be silicon, another glue or another flexible connecting component

Fig.. 4b shows schematically and in top view the same part of the preferred arrangement of the pixel unit 3, with now four micro mirrors 1 visible in top view, the micro mirrors being connected at each of their corners to the first ends of the respective actuators 6, drawn in dotted lines, by the connection bubbles 6b also drawn in dotted lines. The actuators 6 are connected on a respective second end to a micro mirror backplane 7. Another preferred embodiment foresees only three actuators 6 per micro mirror 1, which is also sufficient. Another preferred embodiment foresees even only two actuators 6 per micro mirror 1, which would be also sufficient if one side of the micro mirror 1 is flexible, fixed to the micro mirror backplane. The actuators 6 control by their elongation the azimuth and elevation angle of the micro mirrors 1 with respect to the micro mirror backplane 7 and the front side or backside of the screen 5, respectively..

The actuators 6 are in a preferred embodiment piezo-electric actuators being connected with their second ends on a printed circuit board (PCB) or on a ceramic PCB as micro mirror backplane.. Other actuators 6 as electrostatic or magnetic coil actuators 6 and combinations with micro mechanical components or integral micromechanical actuator systems are also imaginable.. Modern technology providing etched micro-membranes in silicon or the like can also be imagined to be used in future.. The micro mirrors 1 can also be an integral part of the actuator 6 or a set of actuators 6. Nano coating for example can also be used to generate reflective surfaces on actuators 6 being controllable in their azimuth and elevation angles..

Fig.. 5 depicts a preferred arrangement of the screen 5, a light source 60 and the eye of the spectator, showing for two pixels the respective red (R), green (G) and blue (B) light beam. In Fig.. 5, as in general, there are drawn always the middle axes of the respective light beams, but for sake of clarity it shall be mentioned again, that each light beam has a certain diameter, which is limited at different positions in the room by the respective micro mirror 1 and by the light output area and a focus the of the light source 60..

In particular Fig.. 5 depicts a preferred embodiment of the screen 5, whereof six pixel units 3 are shown, each comprising an independent micro mirror backplane 7 which is held by a pre-adjustment actuator 9 connected to a mirror backplane 10. Such an arrangement of the pre-adjustment actuators 9 controlling the respective pixel units 3 in their azimuth and elevation angles has the advantage that the micro mirrors 1, in their middle relaxed positions, can become already pre-adjusted to the geometrical conditions of the position of the light source 60 with its one or more lamps and the position of the eyes of the spectator, such that the light beams of each micro mirror 1 or the pixel, respectively, reaches more or less already the eyes of the spectator. Thus the micro mirrors 1 have to be adjusted only slightly and not by larger azimuth or elevation angles, as it would be the case if all the backplanes 7 of all the micro mirrors 1 would be connected directly and parallel to the mirror backplane 10. Herein it is assumed that multiple spectators sit close to each other..

Another preferred embodiment of the screen 5 foresees that each group 2 of micro mirrors 1 being allocated to a certain spectator is mounted on a separate pre-adjustment actuator 9. This allows that multiple spectators sitting not close to each other can still have video vision on the screen 5, wherein the single micro mirrors 1 with their actuators 6 for azimuth and elevation angle control can have limited range with respect to their respective micro mirror backplane 7.

The LCD panel 8 is controlled in a way that position deviations of the micro mirrors 1 which occur by an azimuth and elevation angle movement of the pixel unit 3 are compensated by an appropriate LCD pixel transformation. Another preferred embodiment, which comprises multiple LCD panels 8 or a liquid crystal arrangement, respectively, directly arranged on each of the micro mirrors 1 or on the groups 2 of micro mirrors 1, does not have this pixel transformation requirement..

Another preferred embodiment comprises a thermoplastic material in which the micro mirror backplane 7 is fixed after the pixel unit 3 or the group 2 of micro mirrors 1 are brought into a right azimuth and elevation angle position.. Further it is imaginable that one or more pre-adjustment actuators 9 are moved along all the pixel units 3 or groups 2 of micro mirrors 1 in order to heat the thermoplastic material partially, to control the respective pixel units 3 or groups 2 of micro mirrors 1 in to the correct azimuth and elevation angle position and step further then to a next unit.

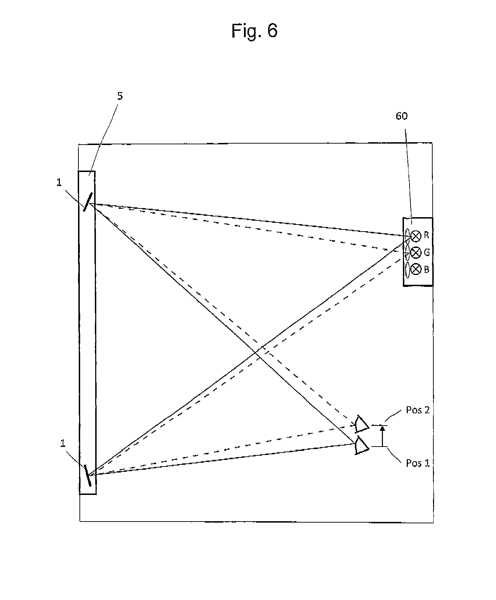

Fig. 6 depicts schematically two light beams as continuous lines from the light source 60 to two pixels or two micro mirrors 1, respectively, and as reflection further to a first position Pos_1 of the spectator's eye. In case the spectator moves his head and therewith his eyes fast from the first position Pos_1 to a second position Pos_2, and assuming that a control and a change of the azimuth and elevation angles of all the micro mirrors 1 of the screen 5 cannot take place at once, this results in a parallax deviation, as mentioned before

The eye in the second position Pos_2, in assumption the micro mirrors 1 are in the same position as before when the eye was in the first position, would see in the depicted pixels or micro mirrors 1, respectively, suddenly another color of the light source 60, if the movement of the head matches with the distance of the lights inside the light source 60 and the lamps are arranged as drawn..

Assuming that the head gets rather moved horizontally than vertically a preferred arrangement of the light source 60 is that the lamps with different colors (R,G,B) would be aligned vertically, to avoid such a color change by parallax deviations, as described above.

In case that only white light with a large enough light output beam is provided by the light source 60, such parallax problems with color changes of the image vision, as described above, do not exist.

Another preferred embodiment comprises two or more light sources 60, such as for a second spectator there is used a second light source 60, which is moved according to movements of the head of the second spectator in a direction to avoid parallax image distortions.

Another preferred embodiment comprises further steps of measuring the position of the head of the spectator and calculating and displaying a respective changing 3D image or video images with respect to the position of the head of the spectator. Furthermore it is imaginable that positions of hands or other significant parts of the spectator get detected as well by the one or more cameras 70 which information is used for further image calculations resulting in image changes with respect to the positions of the hand or the other significantparts.

Furthermore, although the present invention has been described in connection with certain specific embodiments for illustrative purposes, the present invention is not limited thereto.. Accordingly various modifications, adaptations and combinations of various features of the described embodiments can be practiced without departing from the scope of the present invention as set forth in the accompanying claims.

Where technical features mentioned in any claim are followed by reference signs, those reference signs have been included just for the sole purpose of increasing intelligibility of the claims and accordingly, such reference signs do not have any limiting effect on the scope of each element identified by way of example by such reference signs.

### List of Reference Numerals

- 1: micro mirror
- 2: group (of micro mirrors)
- 3: pixel unit (of micro mirrors)
- 4: replacement micro mirror
- 5: screen
- 6: actuator
- 6b: connection bubble
- 7: micro mirror backplane
- 8: LCD screen
- 9: pre-adjustment actuator
- 10: mirror backplane
- 60: light source
- 70: Camera unit
- A,B: Movement directions
- Pos_1: first eye position
- Pos_2: second eye position

## Claims

1. Method for 2D and/or 3D image or video vision for one or more spectators looking at a screen (5), the screen (5) comprising a mirror backplane (10) with a plurality of micro mirrors (1) reflecting light from a light source (60) towards the eyes of one of the spectators, wherein each pixel unit (3) of the screen (5) comprises a group (2) of the micro mirrors (1) being allocated to the one spectator, the method comprising the following steps:
a) capturing an image of the eyes of the one spectator by one or more camera units (70) and determining the position coordinates of the eyes of the one spectator;
b) controlling the micro mirrors (1) each in its azimuth and elevation angle by actuators (6) connected thereto, such that all the micro mirrors (1) of all the groups (2) allocated to the one spectator reflect light beams directly into the eyes of the one spectator;
c) receiving a video input signal for the one spectator and determining thereof the brightness and color for each pixel or group (2), respectively, within the screen (5) for said one spectator;
d) controlling the brightness and color of the reflected and emitted light from all the pixel or groups (2), respectively, by one or multiple LCD panels (8) in front of said micro mirrors (1) of the groups (2), such that the one spectator has an image impression corresponding to the video input signal..

2. Method according to claim 1, wherein for a 2D color vision for the one spectator the respective groups (2) of micro mirrors (1) within each pixel unit (3) comprise three micro mirrors (1), wherein each of the micro mirrors (1) of said groups (2) is allocated to a different light color beam, the different color being red, green or blue.

3. Method according to claim 1, wherein for a 3D color vision for the one spectator the respective groups (2) within each pixel unit (3) comprise two times three micro mirrors (1), wherein the first three micro mirrors (1) are allocated for a right eye and the second three micro mirrors (1) are allocated for a left eye of the one spectator, wherein each of the first and of the second three micro mirrors (1) are allocated to a different light color beam, the different color being red, green or blue.

4. Method according to one or more of the preceding claims, wherein the light source (60) comprises at least three different lamps emitting light towards the screen (5), whereof one is emitting red light, one green light and one blue light, or wherein the light source (60) comprises a lamp emitting white light towards the screen (5).

5. Method according to one or more of the preceding claims, wherein the different colors of the light for the respective micro mirror (1) gets generated by a color filter in front of or on the respective micro mirror (1) or in front of the respective part of the LCD panel (8) allocated to the respective micro mirror (1).

6. Method according to one or more of the preceding claims, wherein the light source (60) is controllable in its position by a light source actuator, such that upon a detection of a movement of the eyes of the one spectator and under the assumption that the positions of the respective micro mirrors (1) are unchanged the resulting parallax deviation is compensated by a calculation and control of the light source actuator resulting in a respective movement of the light source (60), such that the eyes of the spectator still see the same image and colors.

7. Method according to one or more of the preceding claims, wherein each pixel unit (3) comprises additional groups (2) of the plurality of the micro mirrors (1), the additional groups (2) being allocated to a respective additional spectator, wherein for each spectator there is provided a single group (2) of the micro mirrors (1) within each of the pixel units (3), further comprising applying the steps a) - d) to each additional group (2) of micro mirrors (1)

8. Method according to claim 7, further comprising the steps of displaying for different spectators different images according to two or more video input signals.

9. Method according to one or more of the preceding claims, wherein each of the pixel units (3) comprising groups (2) of micro mirrors (1) is connected to a separate pre-adjustment actuator (9) providing by a respective control by a control unit a pre-adjustment of an azimuth and an elevation angle of the respective pixel unit (3), such as the reflected light of the screen (5) is emitted towards a middle of an area of the one or more spectators while the micro mirrors (1) are in a middle position.

10. Method according to claim 9, wherein each of the pixel units (3) is seated in a thermoplastic material and further including the steps of heating the thermoplastic material until its gets flexible, pre-adjusting the pixel unit (3), allowing the thermoplastic material to cool down, such that the pixel unit (3) is held fixed then in the pre-adjusted position.

11. Method according to claim 10, wherein one or more heating units together with respective pre-adjustment actuators (9) are movable along the pixel units (3), the method further comprising the steps of heating, actuating and pre-adjusting the pixel unit (3) to remain in their respective pre-adjusted position..

12. Method according to one or more of the preceding claims, wherein the one or more camera units (70) comprise at least one stereo camera or at least two single cameras, further comprising the step of calibrating before executing step b), the step of calibrating comprising
- detecting the light beam of each of the micro mirrors (1) separately at a reference point;
- controlling the respective micro mirror (1) in its azimuth and elevation angle, such that its reflected light beam is focused on a spot of the reference point;
- storing respective calibration parameters for each respective micro mirror (1) in regards to its control signal in a memory for a further precise control of the light beams towards the respective eye of the respective spectator..

13. Method according to one or more of the preceding claims, further comprising the steps of measuring the position of the head of the spectator and calculating and displaying a respective changing 3D image or video images with respect to the position of the head of the spectator..

14. Screen (5) for 2D or 3D vision for one or more spectators, the screen (5) comprising following components:
a) a mirror backplane (10) , the mirror backplane (5) providing for a reference plane for the screen (5) and being connectable to a wall, a stand or the like;
b) a plurality of micro mirrors (1) connected to the mirror backplane (10), each micro mirror (1) being controllable by at least one actuator (6) in its azimuth and elevation angle position;
c) a light source (60), the light source (60) comprising at least one lamp for white light and/or at least three lamps for red, green and blue light color;
d) a plurality of pixel units (3), wherein each pixel unit (3) comprises at least one group (2) of micro mirrors (1), the at least one group (2) of micro mirrors (1) of each pixel unit (3) being allocated to one spectator, such that incoming light from the light source (60) gets reflected by the at least one group (2) of the micro mirrors (1) of each pixel unit (3) to both eyes of the allocated spectator;
e) one or more camera units (70) for 3D detection of the position coordinates of the eyes of the allocated spectator; and
f) a microprocessor unit for calculation of all the control signals controlling the actuators (6) for each micro mirror (1) for its respective azimuth and elevation angle..

15. Screen (5) according to claim 14, wherein the micro mirrors (1) within one pixel unit (3) are mounted on a micro mirror backplane (7) which is together with the pixel unit (3) pre-adjustably controllable by pre-adjustment actuators (9) in its azimuth and elevation angle, such that all the pixel units (3) reflect the incoming light towards a central position of the spectators while the micro mirrors (1) are in a middle position.

## Amended claims

### Amended claims in accordance with Rule 137(2) EPC.

**1.** Method for 2D and/or 3D image or video vision for one or more spectators looking at a screen (5), the screen (5) comprising:
a mirror backplane (10) with a plurality of micro mirrors (1) reflecting light from a light source (60) towards the eyes of the one or more spectators,
the plurality of micro mirrors (1) of the screen (5) being divided into pixel units (3), wherein each pixel unit (3) comprises at least one group (2) of micro mirrors (1), whereof a respective group (2) of micro mirrors (1) is allocated to a respective spectator,
the method comprising the following steps:
a) capturing an image of the eyes of the respective spectator by one or more camera units (70) and determining the position coordinates of the eyes of the respective spectator;
b) controlling the micro mirrors (1) of the respective groups (2) allocated to the respective spectator each in its azimuth and elevation angle by actuators (6) connected to the micro mirrors (1), such that the micro mirrors (1) of the respective groups (2) allocated to the respective spectator reflect light beams directly into the eyes of the respective spectator;
c) receiving a video input signal for the respective spectator and determining thereof the brightness and color for each pixel or respective group (2), respectively, within the screen (5) for said respective spectator;
d) controlling the brightness and color of the reflected and emitted light from the micro mirrors (1) of the respective groups (2) by one or multiple LCD panels (8) in front of said micro mirrors (1) of the respective groups (2), such that the respective spectator has a video image impression corresponding to the video input signal, the method **characterized by**:
e) determining by a following image of the eyes of the respective spectator from the one or more camera units (70) a change of the position coordinates of the eyes according to a movement of the head of the respective spectator;
f) calculating a second position of the light source (60) where it has to be moved, such that a parallax deviation caused by the change of the position coordinates of the eyes is compensated, such that the eyes of the respective spectator still see the same image and colors as before, under the assumption that the positions of the respective micro mirrors (1) remain unchanged;
g) controlling and moving the light source (60) into the second position by means of a light source actuator.

**2.** Method according to claim 1, wherein for a 2D color vision for the respective spectator the respective groups (2) of micro mirrors (1) within each pixel unit (3) comprise three micro mirrors (1), wherein each of the micro mirrors (1) of said respective groups (2) is allocated to a different light color beam, the different color being red, green or blue.

**3.** Method according to claim 1, wherein for a 3D color vision for the respective spectator the respective groups (2) within each pixel unit (3) comprise two times three micro mirrors (1), wherein the first three micro mirrors (1) are allocated for a right eye and the second three micro mirrors (1) are allocated for a left eye of the respective spectator, wherein each of the first and of the second three micro mirrors (1) are allocated to a different light color beam, the different color being red, green or blue.

**4.** Method according to one or more of the preceding claims, wherein the light source (60) comprises at least three different lamps emitting light towards the screen (5), whereof one is emitting red light, one green light and one blue light, or
wherein the light source (60) comprises a lamp emitting white light towards the screen (5).

**5.** Method according to one or more of the preceding claims, wherein the different colors of the light for the respective micro mirror (1) gets generated by a color filter in front of or on the respective micro mirror (1) or in front of the respective part of the LCD panel (8) allocated to the respective micro mirror (1).

**6.** Method according to one or more of the preceding claims, wherein each pixel unit (3) comprises additional groups (2) of the plurality of the micro mirrors (1), the additional groups (2) being allocated to a respective additional spectator, wherein for each spectator there is provided a single group (2) of the micro mirrors (1) within each of the pixel units (3), further comprising applying the steps a) - g) to each additional group (2) of micro mirrors (1).

**7.** Method according to claim 7, further comprising the steps of displaying for different spectators different images according to two or more video input signals.

**8.** Method according to one or more of the preceding claims, wherein each of the pixel units (3) comprising groups (2) of micro mirrors (1) is connected to a separate pre-adjustment actuator (9) providing by a respective control by a control unit a pre-adjustment of an azimuth and an elevation angle of the respective pixel unit (3), such as the reflected light of the screen (5) is emitted towards a middle of an area of the one or more spectators while the micro mirrors (1) are in a middle position.

**9.** Method according to claim 8, wherein each of the pixel units (3) is seated in a thermoplastic material and further including the steps of heating the thermoplastic material until its gets flexible, pre-adjusting the pixel unit (3), allowing the thermoplastic material to cool down, such that the pixel unit (3) is held fixed then in the pre-adjusted position.

**10.** Method according to claim 9, wherein one or more heating units together with respective pre-adjustment actuators (9) are movable along the pixel units (3), the method further comprising the steps of heating, actuating and pre-adjusting the pixel unit (3) to remain in their respective pre-adjusted position.

**11.** Method according to one or more of the preceding claims, wherein the one or more camera units (70) comprise at least one stereo camera or at least two single cameras, further comprising the step of calibrating before executing step b), the step of calibrating comprising
- detecting the light beam of each of the micro mirrors (1) separately at a reference point;
- controlling the respective micro mirror (1) in its azimuth and elevation angle, such that its reflected light beam is focused on a spot of the reference point;
- storing respective calibration parameters for each respective micro mirror (1) in regards to its control signal in a memory for a further precise control of the light beams towards the respective eye of the respective spectator.

**12.** Method according to one or more of the preceding claims, further comprising the steps of measuring the position of the head of the spectator and calculating and displaying a respective changing 3D image or video images with respect to the position of the head of the spectator and/or detecting the positions of hands or other significant parts of the spectator by the one or more cameras 70 which information is used for further image calculations resulting in image changes with respect to the positions of the hand or the other significant parts.

**13.** Screen system for 2D or 3D vision for one or more spectators, the screen system comprising following components:
a) a screen (5) comprising:
- a mirror backplane (10) as a reference plane for the screen (5) being connectable to a wall, a stand or the like;
- a plurality of micro mirrors (1) being connected to the mirror backplane (10), wherein each micro mirror (1) is controllable by at least one actuator (6) in its azimuth and elevation angle position; and
wherein the plurality of micro mirrors (1) is divided into a plurality of pixel units (3), wherein each pixel unit (3) comprises at least one group (2) of micro mirrors (1), whereof one respective group (2) of micro mirrors (1) of each pixel unit (3) is allocated to one respective spectator, such that incoming light from a light source (60) gets reflected by the respective group (2) of micro mirrors (1) of each pixel unit (3) to both eyes of the respective spectator;
b) one or more camera units (70) for 3D detection of position coordinates of the eyes of the respective spectator; and
c) a microprocessor unit for calculating all control signals for a control of the actuators (6) of each micro mirror (1) according to a video input signal, the position coordinates of the eyes of the respective spectator and a second position of the light source;
**characterized by**:
d) the light source (60) comprising:
- at least one lamp for white light and/or at least three lamps for red, green and blue light;
- a light source actuator for moving the light source (60) to the second position, wherein the light source actuator is controlled by a light source control signal of the microprocessor unit.

**14.** Screen system according to claim 13, wherein the micro mirrors (1) of each pixel unit (3) or of each group (2) are mounted on a respective micro mirror backplane (7), each micro mirror backplane (7) being pre-adjustably controllable by pre-adjustment actuators (9) in its azimuth and elevation angle, such that all the pixel units (3) reflect the light from the light source (60) towards a central position of the spectators while the micro mirrors (1) are in a middle position.

**15.** Screen system according to claim 14, wherein each of the respective pixel units (3) or respective group (2) is seated in a respective thermoplastic material and further including steps of heating the respective thermoplastic material until its gets flexible, pre-adjusting the respective pixel unit (3) or respective group (2), allowing the respective thermoplastic material to cool down, such that the respective pixel unit (3) or respective group (2) is held fixed then in the respective pre-adjusted position.
